# EUROPEAN PATENT APPLICATION

(11) **EP 2 908 006 A1**
(43) Date of publication of application: **19.08.2015**
(21) Application number: 14154894.1
(22) Date of filing: 12.02.2014
(51) Int. Cl.: F03D 11/00

(54) **Fluid collection arrangement**

(71) Applicant: Siemens Aktiengesellschaft, 80333 München (DE)
(72) Inventor: Buch-Lorentsen, Karsten, 8680 Ry (DK)

(57) **Abstract**

The invention describes a fluid collection arrangement (1) realised to collect fluid (F) in a rotating component (20) of an electrical machine, which fluid collection arrangement (1) comprises at least one collection tank (10) arranged on the rotating component (20), and wherein a collection tank (10) comprises an intake opening (11) for the intake of fluid (F); and a furled interior wall arrangement (12) realised to retain the fluid (F) in the collection tank (10) through a complete revolution of the rotating component (20). The invention further describes a wind turbine hub (20) comprising a number of rotor blade mounting interfaces (30) realised to support a number of rotor blades (3), wherein the hub (20) is realised to rotate about a rotation axis (R₂₀) of a generator and comprises such a fluid collection arrangement (1) to collect fluid leakage (F) from the rotor blade mounting interfaces (30). The invention also describes a wind turbine (2) comprising a hub (20) arranged to support a number of rotor blades (3), and such a fluid collection arrangement (1) arranged in an interior cavity (200) of the hub (20).

## Description

The invention describes a fluid collection arrangement; a wind turbine hub comprising such a fluid collection arrangement; and a wind turbine with a hub comprising such a fluid collection arrangement.

A wind turbine can have a number of rotor blades, generally three, mounted to a hub that rotates as a result of wind acting on the rotor blades. A rotor blade is mounted to the hub by means of an interface unit, which generally comprises a circular bearing, since the root end of a blade is also generally circular. Generally, a blade can be pitched by rotating the entire blade through several degrees about its longitudinal axis. To this end, the interface unit also includes a pitch drive that can be actuated by a pitch motor of a pitch drive unit or pitch cylinder hydraulic system. To ensure smooth operation, a quantity of hydraulic oil is generally required in the pitch drive. Usually, various seals are used to contain the fluid. However, for various reasons, for example failure of a system hose, valve, seal etc., fluid may escape and spread into the hub interior. Particularly in the case of a large wind turbine, the interface units and pitch drives are also large. For example, an interface unit with a circular bearing may have a diameter of 4.0 m or more. A correspondingly large quantity of hydraulic oil is required to ensure a smooth motion of the pitch drive and blade root, so that a correspondingly large quantity of fluid may be expected to escape over time. Leakage of hydraulic oil - usually some kind of mineral oil - must be prevented from contaminating the environment. Clearly, therefore, such liquids must be safely collected.

In a stationary system, fluid leakage is easily collected by allowing it to flow downwards (assisted by gravity) into a suitable collection vessel such as an open canister. However, in the case of a rotating system such as a wind turbine hub, any fluid collected in such a vessel would simply leak out again as the hub rotates, since the vessel opening will at some point face downwards. Therefore, prior art solutions can involve the use of absorbent matting to soak up the fluid. However, even large quantities of matting may not be enough to ensure that all leakage is collected. Furthermore, the matting must be replaced at fairly regular intervals, requiring that a technician enter the hub to perform that maintenance step.

It is therefore an object of the invention to provide a more efficient and reliable way of dealing with fluid leakage in a rotating system.

This object is achieved by the fluid collection arrangement of claim 1; by the wind turbine hub of claim 7; and by the wind turbine of claim 15.

According to the invention, the fluid collection arrangement is realised to collect fluid leakage in a rotating component of an electrical machine and comprises at least one collection tank arranged on the rotating component, and wherein a collection tank comprises an intake opening for the intake of leakage fluid; and a furled interior wall arrangement for retaining the fluid in the collection tank through a complete revolution of the rotating component.

In the context of the invention, the term 'fluid' is used to refer to any liquid such as a hydraulic oil or lubricating oil that is generally contained within a closed system but which may - for a number of reasons as given above - escape and need to be collected.

An advantage of the fluid collection arrangement according to the invention is that the furled interior shape of a collection tank securely contains any leakage fluid - for example hydraulic oil - that enters through the intake opening. Once the fluid is inside the collection tank, it cannot escape, even though the intake opening remains open, and even though the electrical machine component rotates so that the intake opening faces downwards for a portion of a complete revolution of the rotating component. In the context of the invention, the term "furled" is used in with its accepted meaning, i.e. to indicate that the interior wall of a collection tank appears to have been "rolled up" about a longitudinal axis of the collecting tank. A cross-section through the collecting tank, taken orthogonally to its longitudinal axis, will show the interior wall arrangement turning about the longitudinal axis. In the case of a curved interior wall arrangement, such a cross-section is therefore similar to a spiral, and the overall shape of the collecting tank may resemble a conic spiral. In the case of an interior wall arrangement comprising flat wall segments, a cross-section taken orthogonally to the longitudinal axis resembles a spirangle or geometric spiral, and the overall shape of the collecting tank may resemble a three-dimensional spirangle, for example a three-angle or four-angle spirangle depending on how the wall segments have been joined. The furled arrangement may also be regarded as a kind of 'labyrinth' from which the collected fluid cannot find its way out.

According to the invention, the wind turbine hub - with a number of rotor blade mounting interfaces realised to support a number of rotor blades and realised to rotate about a rotation axis of a generator - comprises a fluid collection arrangement according to the invention for collecting fluid leakage from the rotor blade mounting interfaces.

An advantage of the wind turbine hub according to the invention is that the fluid collection arrangement can be mounted to the hub in a straightforward manner. For example, it can be mounted to the hub during a manufacturing stage. Access to the hub is not required thereafter for this purpose, and the hub with its fluid collection arrangement is ready for any fluid leakage from the rotor blade interface units from the moment the wind turbine is made operational.

According to the invention, a wind turbine comprises a hub arranged to support a number of rotor blades and realised to rotate about a rotation axis of a generator, and a fluid collection arrangement according to the invention arranged in an interior cavity of the hub.

An advantage of the wind turbine according to the invention is that any fluid leakage from the rotor blade pitch bearings is collected essentially immediately by the fluid collection arrangement, and the collected fluid is retained by the furled shape of the collection tank(s). This makes it possible to prolong an interval between scheduled hub maintenance procedures.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that the electrical machine is the generator of a wind turbine, and that the rotating component is the hub. Usually, a wind turbine has a plurality of rotor blades. In the following, without restricting the invention in any way, it may be assumed that the wind turbine according to the invention has three rotor blades, so that the hub is realised for mounting to three rotor blades. In this case, the hub will have three interface units arranged equidistantly about the hub. The blade is usually mounted to the hub by means of a suitable bearing, for example a bearing comprising a plurality of ball bearings contained in a race; a plain bearing, etc. In the following, the terms "rotor blade mounting interface" and "blade bearing" may be used interchangeably.

A fluid collection arrangement according to the invention can be mounted on an inside or outside surface of a rotating component, depending on the requirements of the relevant application. In the case of a wind turbine hub, fluid leakage generally arises from the pitch cylinder hydraulic system, and leakage fluid will enter the interior of the hub. Therefore, in the following but without restricting the invention in any way, it may be assumed that the fluid collection arrangement is arranged in an interior cavity of a wind turbine hub.

As indicated above, the collecting tank has an interior wall arrangement with a spiral or spirangle form. Preferably, a collection tank of the fluid collection arrangement is arranged to follow the bearing, so that, during rotation of the hub, the collecting tank is preferably arranged so that the intake opening faces towards any fluid that might flow downward when assisted by gravity as the hub rotates. This arrangement "fixes" the orientation of the intake opening, so that the longitudinal axis of a collecting tank is preferably essentially in line with the axis of rotation of the hub. Of course, these axes need not be aligned as such. Preferably, the furled interior wall arrangement is realised to form an inner chamber for retaining the fluid. This can be achieved simply by realising a spiral or spirangle shape with a sufficient number of "turns" about the longitudinal axis of the tank. Any fluid that enters the tank will be collected in the inner chamber as the hub rotates.

The direction of rotation of the hub is also fixed, since the rotor of the generator of a wind turbine hub will be made to rotate either clockwise or counter-clockwise. As a result, the interior wall arrangement of the collecting tank will have a "furl direction" that can be defined relative to the direction of rotation of the hub. The furl direction describes the direction of a point as it travels on a path in an essentially vertical plane from the intake of the collecting tank to a point in the interior of the collecting tank, for example to an inner terminating edge of the collecting tank. In a particularly preferred embodiment of the invention, the furled interior wall arrangement has a furl direction opposite in sense to the rotation direction of the hub. For example, if the hub is realised to rotate clockwise when viewed front the front or nose end, a collecting tank of the fluid collection arrangement preferably comprises a counter-clockwise furl direction. If the collecting tank has the shape of a conic spiral as described above, a cross-section through the tank would show a counter-clockwise spiral shape. The advantage of such a furl direction, opposite in sense to the rotation direction of the hub, is that any fluid that enters the collecting tank is effectively contained in the tank, since it cannot escape even as the tank transitions from an upward direction of motion to a downward direction of motion.

The intake opening is preferably realised to catch as much fluid as possible from a leakage source such as a pitch bearing. Therefore, in a particularly preferred embodiment of the invention, the intake opening extends in a direction essentially parallel to the longitudinal axis of the tank. Preferably, the extent of the intake opening is similar to the diameter of a bearing, so that fluid leaking from the bearing at any point will more likely enter an intake opening to be caught by the collection tank. Preferably, the intake opening extends over the greater part of the length of the collection tank.

Over time, a quantity of leakage fluid may collect in a collection tank. Ultimately, this fluid must be removed, for example during a maintenance procedure of the wind turbine. For example, a technician may pass a tube from the intake opening into the inner chamber and siphon off the collected fluid. However, this may be time-consuming and messy, and it may be difficult to ensure that all fluid is siphoned off. Therefore, in a particularly preferred embodiment of the invention, a collecting tank comprises a drainage arrangement realised to facilitate a draining of the collected fluid from the collection tank. For example, in a preferred solution, the drainage arrangement comprises a tube extending from the inner chamber of the collection tank to an exterior of the collection tank to provide a drainage passage for the fluid, and a valve, for example a ball valve, for closing off fluid flow through the tube. The tube is therefore accessible from the interior of the hub, and the valve is preferably easily accessible to a technician. To drain the fluid from the inner chamber, the technician can open the valve and allow the fluid to drain from the inner chamber of the collecting tank into a canister. The leakage fluid can then be removed from the hub and wind turbine. The drainage procedure can therefore be carried out in a clean and straightforward manner, with little risk of spillage or contamination.

Preferably, the collection tank is shaped to conform to an inner wall contour of the hub. Particularly in the case of a large wind turbine, the weight of the collected fluid can be considerable, so that a collection tank that conforms to the hub shape will be favourably supported. Furthermore, by conforming to the interior of the hub, the intake opening of the collection tank is particularly well suited to collecting as much leakage fluid as possible.

As mentioned above, in the case of a large wind turbine, the pitch cylinder hydraulic systems are large and contain a relatively large quantity of hydraulic oil. Therefore, relatively large quantities of fluid may be expected to leak out over time. However, maintenance procedures to drain the collected leakage fluid can be expensive and time-consuming. Therefore, in a particularly preferred embodiment of the invention, a collection tank of a fluid collection arrangement has a fluid capacity of at least 60 litres, more preferably at least 90 litres, most preferably at least 120 litres.

Installation of a wind turbine at a wind park site can be carried out in various ways. For example, during installation of a direct-drive wind turbine, the generator is mounted on top of a wind turbine tower, and the hub is then lifted into place and connected to the outside rotor of the generator. In a subsequent step, the rotor blades are lifted into position and connected to the hub. To lift the hub safely into place, it may be equipped with a lifting interface, for example for connecting to a lifting yoke. The lifting yoke can allow position adjustments to be made to the hub so that it can be mounted accurately to the outside rotor, even during unfavourable weather conditions. Such a lifting interface is generally formed between a pair of root bearings since the hub itself does not have much surface area to offer, and the root bearings themselves should be protected from any damage during the lifting procedure. To accommodate such a lifting interface, the fluid collection arrangement according to the invention may comprise two collection tanks, each arranged between a pair of rotor blade interface units, so that two blade bearings are each directly followed by a collecting tank. The third blade bearing is "followed" only by the lifting interface. In this case, the collecting tank that also collects leakage fluid from that third blade bearing may have a larger capacity than the other collecting tank.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 is a schematic cross-section through a hub of a wind turbine, showing a fluid collection arrangement according to an embodiment of the invention;
Fig. 2 indicates a number of stages throughout a revolution of the hub of Fig. 1;
Fig. 3 is a perspective rendering of a wind turbine hub according to an embodiment of the invention;
Fig. 4 shows a perspective view of a collection tank of a fluid collection arrangement according to an embodiment of the invention;
Fig. 5 shows a cross-section through a collection tank of a fluid collection arrangement according to an embodiment of the invention;
Fig. 6 shows a wind turbine according to an embodiment of the invention.

In the diagrams, like numbers refer to like objects throughout. Objects in the diagrams are not necessarily drawn to scale.

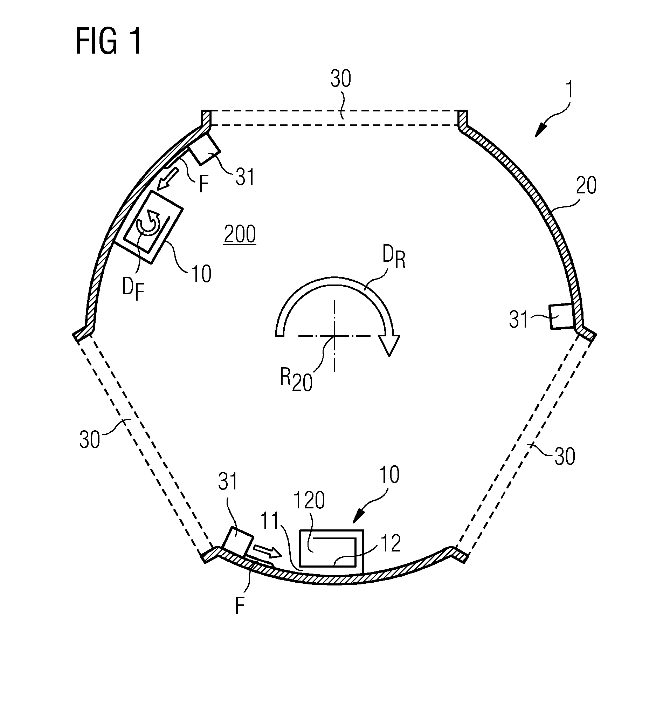

Fig. 1 is a schematic cross-section through a hub 20 of a wind turbine, showing a fluid collection arrangement 1 according to an embodiment of the invention arranged in an interior cavity 200 of the hub 20. The hub 20 has three rotor blade bearing interfaces 30. A rotor blade (not shown) is mounted to the hub 20 by means of a bearing interface 30. The pitch of each rotor blade is controlled by a pitch drive unit 31. The bearings 30 require lubrication while the pitch drive units 31 require hydraulic oil, and some quantity of fluid F generally leaks out for various reasons as mentioned above. The fluid collection arrangement 1 comprises a number of collection tanks 10. Each tank 10 is arranged between pairs of blade bearings 30, so that a tank 10 "follows" a blade bearing 30 as the hub 20 rotates in the direction of rotation R₂₀ shown, about its axis of rotation R₂₀.

A collection tank 10 has a furled interior wall arrangement 12. In the embodiment shown, this furled interior wall arrangement 12 is realised in the manner of a three-dimensional geometric spiral, or spirangle, with flat wall segments arranged at decreasing distances from a central axis, as will be shown later. In this way, an inner chamber 120 is formed in the collection tank 10 by the inner wall segments. The direction of furl D_{F} is opposite in sense to the direction of rotation D_{R} of the hub 20.

During operation of the wind turbine, any fluid F that leaks out will flow downward, as indicated in the diagram, owing to gravity. Here, leakage fluid F from the lower pitch drive unit 31 can be caught or collected by the collection tank 10 in the lower portion of the diagram. Leakage fluid F from the upper pitch drive unit 31 can be caught or collected by the collection tank 10 in the upper left portion of the diagram.

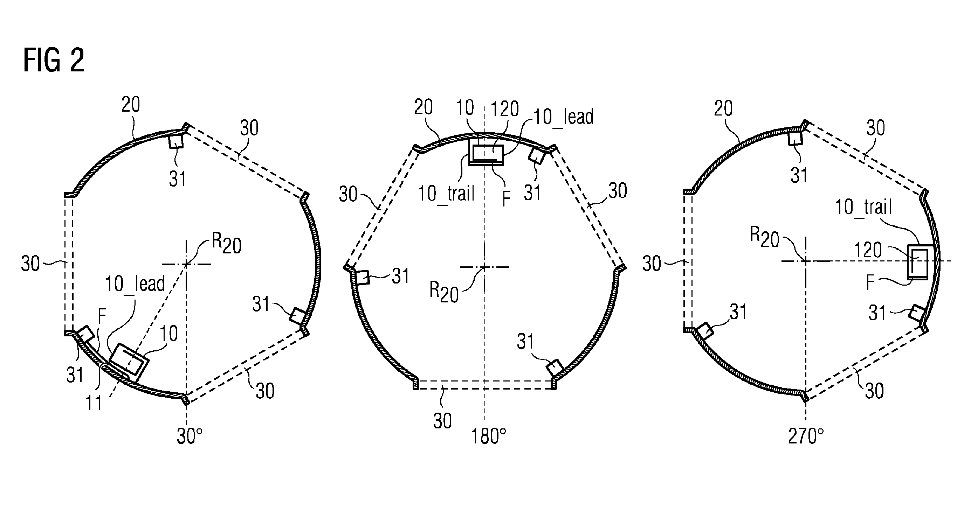

As the hub rotates, any fluid F that has been collected by a tank 10 is contained in the inner chamber 120. Fig. 2 demonstrates the principle of the invention and indicates a number of stages throughout a revolution of the hub 20 of Fig. 1. Here, a collection tank 10 is shown during three stages of a complete revolution of the hub 20. As the hub rotates, a leading face 10_lead of the tank 10 is first to pass any point along its path of travel, and a trailing face 10_trail is last to pass that point.

In the left-hand side of the diagram, the hub 20 has rotated through 30° in a clockwise direction relative to a vertical line extending downward from the hub's axis of rotation R₂₀. Fluid F from a pitch drive unit 31 and/or bearing 30 is flowing downward, towards the leading face 10_lead of the tank 10, and enters the collecting tank 10 through the intake 11.

In the centre portion of the diagram, the hub 20 has rotated through 180° relative to a vertical line extending downward from the hub's axis of rotation R₂₀. Now, the collection tank 10 is at the top of the hub 20. The fluid F, which will always flow downward owing to gravity, has found its way into the interior 120 of the collection tank 10.

In the right-hand side of the diagram, the hub 20 has rotated through 270° relative to a vertical line extending downward from the hub's axis of rotation R₂₀. The intake opening 11 of the collection tank 10 is facing downward, as is the leading face 10_lead, while the trailing face 10_trail is now facing upward. Even so, no fluid F will escape from the tank 10 through the intake opening 11, since the fluid F is safely contained in the inner chamber 120 of the tank 10.

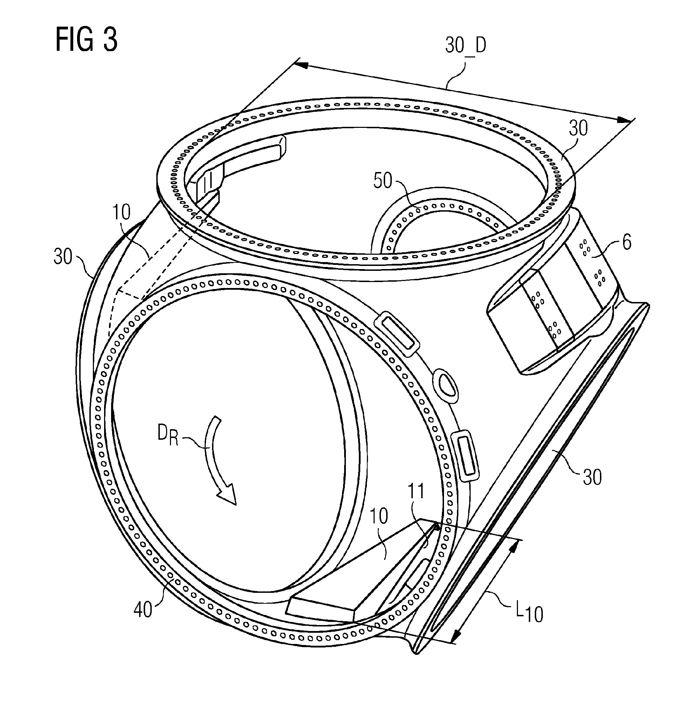

Fig. 3 is a perspective rendering of a wind turbine hub 20 according to an embodiment of the invention. The diagram shows three rotor blade bearing interfaces 30 to which three rotor blades 3 may be connected. The diagram also shows a generator bearing interface 40 with which the hub 20 can be mounted to an outside rotor of a direct-drive generator. The diagram also shows a nose-cone interface 50 to which a nose-cone can be mounted. To mount the hub 20 to a wind turbine during an installation procedure, the hub 20 is preferably connected to a lifting yoke. To this end, a lifting interface 6 is formed as part of the hub 20 during manufacture. For this reason, this embodiment of the hub 20 uses two collection tanks 10 in a fluid collection arrangement, since the lifting interface already takes up a significant amount of space between two blade bearings 30. The diagram clearly shows one collection tank 10 and indicates the other with dotted lines. The length L₁₀ of a collection tank 10 preferably approaches the diameter 30_D of a rotor blade bearing 30, and the intake opening 11 can extend over the length L₁₀ of the tank 10 to allow as much fluid as possible to be caught and collected.

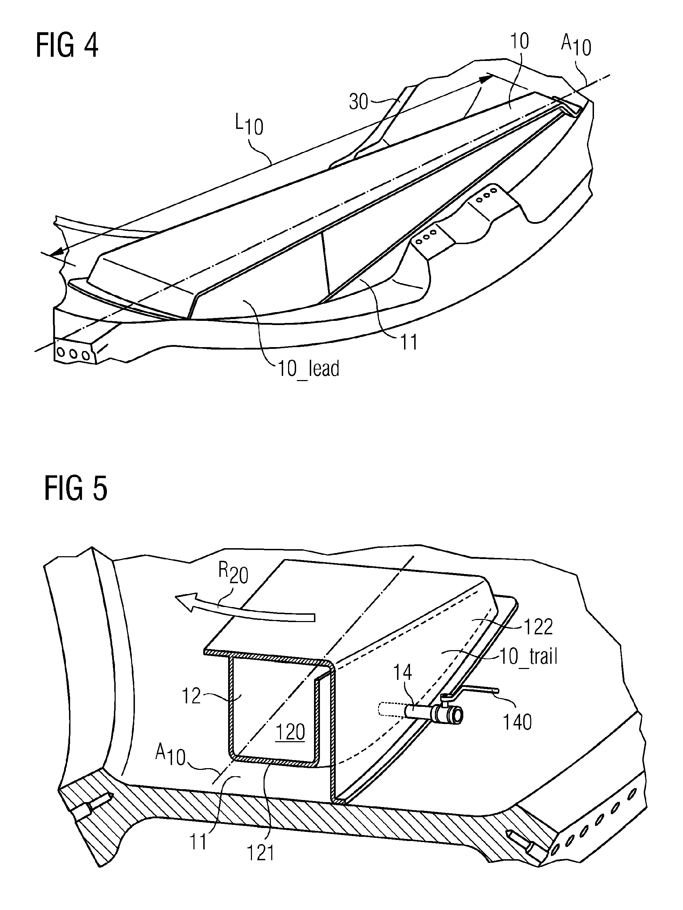

Fig. 4 shows a perspective view of a collection tank 10 of a fluid collection arrangement according to an embodiment of the invention. The diagram shows that the collection tank 10 is formed to suit the curved shape of the hub interior. In this embodiment, the hub is realised for mounting to a generator with an axis of rotation that is tilted by about 6° from the horizontal in order to avoid collisions between the rotor blade tips and the wind turbine tower. The axis of rotation of the hub 20 coincides with the axis of rotation of the generator. Therefore, since the tank 10 is arranged to that its longitudinal axis A₁₀ is essentially parallel to the hub axis of rotation, the tank 10 can be wider and larger at its 'lower' end (lower left portion of the diagram) than at its 'upper' end (upper right portion of the diagram). Here, the tank 10 is viewed in the direction of its leading face 10_lead.

Fig. 5 shows a cross-section through a collection tank 10 of a fluid collection arrangement according to an embodiment of the invention. Here, the tank 10 is viewed in the direction of its trailing face 10_trail. The cross-section is taken closer to the wide end of the tank 10 and shows the furled interior with the inner chamber 120. In this embodiment, an inner portion 121 of the tank 10 can be made by bending sheet metal at right angles in the form of a partial cone with straight sides. This can be welded, bolted, or otherwise attached to a tank outer portion 122 that has a side wall shaped for mounting to the curved interior hub surface. This diagram also shows a drainage means 14 for draining fluid from the tank inner chamber 120. Here, the drainage means 14 is a tube that extends from the trailing face 10_trail into the inner chamber 120, preferably into the 'deep end' of the chamber 120 as shown here, so that as much fluid as possible can be drained from the tank 10 during a maintenance procedure. The drainage tube 14 can be opened by means of a suitable valve 140 such as a ball valve 140 or stop-cock 140.

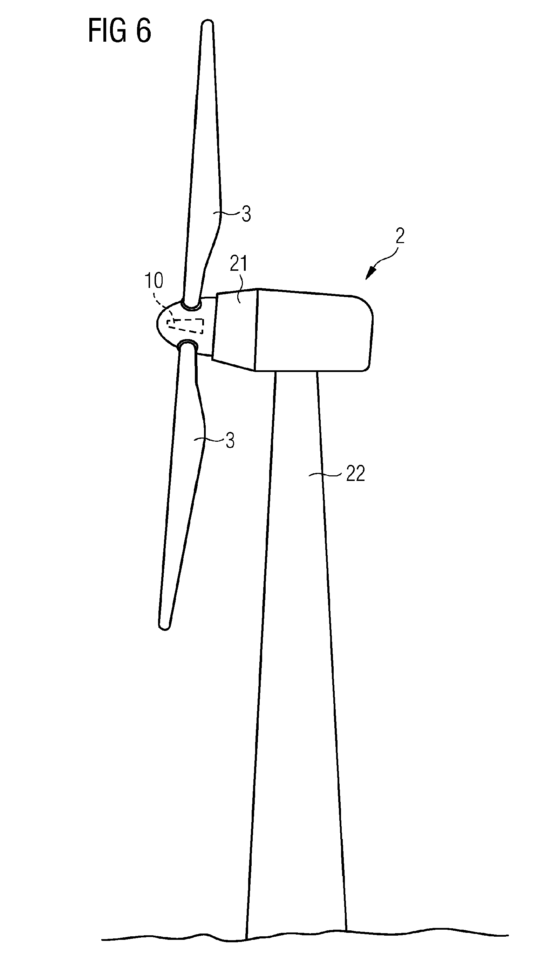

In a direct drive wind turbine, the hub may be mounted to an outside rotor, so that hub and rotor rotate at the same speed. For an indirect drive turbine with a drive shaft and gearbox, the hub might be connected in some appropriate manner to the drive shaft of the generator. Fig. 6 shows a wind turbine 2 according to an embodiment of the invention. This direct-drive wind turbine 2 has a rotating hub 20 connected to an outside rotor 21 of a generator mounted onto a tower 22. A fluid collection arrangement according to the invention is arranged in the hub interior, and comprises a number of collection tanks 10, whereby a collection tank 10 is arranged between blade bearings of rotor blades 3. Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" does not preclude the use of more than one unit.

## Claims

1. A fluid collection arrangement (1) realised to collect fluid (F) in a rotating component (20) of an electrical machine, which fluid collection arrangement (1) comprises at least one collection tank (10) arranged on the rotating component (20), and wherein the collection tank (10) comprises
- an intake opening (11) for the intake of a fluid (F); and
- a furled interior wall arrangement (12) realised to retain the fluid (F) in the collection tank (10) through a complete revolution of the rotating component (20).

2. A fluid collection arrangement according to claim 1, wherein the furled interior wall arrangement (12) has a furl direction (D_{F}) opposite in sense to the rotation direction (D_{R}) of the rotating component (20).

3. A fluid collection arrangement according to claim 1 or claim 2, wherein the furled interior wall arrangement (12) is realised to form an inner chamber (120) for retaining the fluid (F).

4. A fluid collection arrangement according to any of the preceding claims, wherein the intake opening (11) of a collection tank (10) extends in a direction essentially parallel to a longitudinal axis (A₁₀) of the collection tank (10).

5. A fluid collection arrangement according to any of the preceding claims, comprising a drainage means (14) realised to facilitate a draining of the collected fluid (F) from the collection tank (120).

6. A fluid collection arrangement according to claim 5, wherein the drainage means (14) comprises a drainage tube (14) extending from the inner chamber (120) of the collection tank (10) to an exterior of the collection tank (10).

7. A wind turbine hub (20) comprising a number of rotor blade mounting interfaces (30) realised to support a number of rotor blades (3), wherein the hub (20) is realised to rotate about a rotation axis (R) of a generator and comprises a fluid collection arrangement (1) according to any of claims 1 to 6 for collecting leakage fluid (F) from the rotor blade mounting interfaces (30).

8. A wind turbine hub according to claim 7, wherein the fluid collection arrangement (1) is arranged in an interior cavity (200) of the wind turbine hub ().

9. A wind turbine hub according to claim 7 or claim 8, wherein a collection tank (10) of the fluid collection arrangement (1) is arranged to follow a rotor blade mounting interface (30).

10. A wind turbine hub according to any of claims 7 to 9, wherein the collection tank (10) is shaped to conform at least partially to an inner wall contour of the hub (20).

11. A wind turbine hub according to any of claims 7 to 10, wherein the length (L₁₀) of a collection tank (10) is based on a diameter (30_D) of a rotor blade mounting interface (30).

12. A wind turbine hub according to any of claims 7 to 11, wherein the intake opening (11) of a collection tank (10) extends over at least half of the length (L₁₀) of the collection tank (10).

13. A wind turbine hub according to any of claims 7 to 12, wherein a collection tank (10) has a fluid capacity of at least 60 litres, more preferably at least 90 litres, most preferably at least 120 litres.

14. A wind turbine hub according to any of claims 7 to 13 wherein the fluid collection arrangement (1) comprises at least two collection tanks (10), wherein each collection tank (10) is arranged to follow a rotor blade mounting interface (30).

15. A wind turbine (2) comprising a hub (20) arranged to support a number of rotor blades (3), wherein the hub (20) is realised to rotate about a rotation axis (R₂₀) of a generator and wherein the wind turbine (2) comprises a fluid collection arrangement (1) according to any of claims 1 to 6 arranged in an interior cavity (200) of the hub (20).
